# EUROPEAN PATENT SPECIFICATION

(11) **EP 3 839 451 B1**
(45) Date of publication and mention of the grant of the patent: **02.08.2023**
(21) Application number: 20214485.3
(22) Date of filing: 16.12.2020
(51) Int. Cl.: G01J 1/04, G01J 1/42

(54) **DEVICE FOR TESTING AIRPORT GROUND LIGHTS**
VORRICHTUNG ZUR ÜBERPRÜFUNG DER PISTENBEFEUERUNG AUF FLUGHÄFEN
ÉQUIPEMENT DE CONTRÔLE DES FEUX DE BALISAGE AÉROPORTUAIRE

(30) Priority: 20.12.2019 IT 201900025027
(43) Date of publication of application: 23.06.2021
(73) Proprietor: Techno Sky S.r.l., 00156 Roma (IT)
(72) Inventor: PETRACHI, Claudio Fausto, 00148 Roma (IT)
(74) Representative: Porta & Consulenti Associati S.p.A.

(56) References cited:
- EP-A2- 0 285 493
- WO-A1-01/84901
- GB-A- 1 454 272
- SITOMPUL DANIEL STEVEN DOXAZO ET AL: "Horizontal Scanning Method by Drone Mounted Photodiode Array for Runway Edge Light Photometry", 2019 INTERNATIONAL SEMINAR ON INTELLIGENT TECHNOLOGY AND ITS APPLICATIONS (ISITIA), IEEE, 28 August 2019 (2019-08-28), pages 41-45, XP033683776, DOI: 10.1109/ISITIA.2019.8937211
- SITOMPUL DANIEL STEVEN DOXAZO ET AL: "Runway Edge Light Photometry System by Using Drone-Mounted Instrument", 2019 INTERNATIONAL SYMPOSIUM ON ELECTRONICS AND SMART DEVICES (ISESD), IEEE, 8 October 2019 (2019-10-08), pages 1-5, XP033641246, DOI: 10.1109/ISESD.2019.8909498 [retrieved on 2019-11-21]

## Description

The present invention relates to a device for testing airport ground lights, a kit for testing airport ground lights and a mobile apparatus for testing airport ground lights.

In every airport open to traffic of passengers or goods, there is a ground lighting system, comprising ground lights, having different purposes, including guiding the pilot during the landing step and indicating the positioning of the airport infrastructures for him/her. The ICAO (International Civil Aviation Organization) provides very precise standards and recommendations on the characteristics, operating conditions and maintenance of ground lighting systems, contained in the publications "Annex 14 Vol.1 Aerodrome Design and Operations" and "Doc. 9157 Aerodrome Design Manual part 4".

In the above-indicated documents, the ICAO recommends integrating the regular maintenance operations of the ground lighting system with mobile photometric measurement equipment, for example that can be towed by a motor vehicle as, for example, shown in figure 17-4 of the aforesaid "Doc. 9157". In particular, the ICAO recommends using apparatuses that comprise television cameras or a photocell array. Such apparatuses are used to individually monitor each airport ground light for measuring the isocandela diagram, the alignment and the colour in operating conditions. A device for testing airport ground lights which is carried by a drone is disclosed in the article "Horizontal Scanning Method by Drone Mounted Photodiode Array for Runway Edge Light Photometry" by Sitompul et al.

The applicant observes that known apparatuses are affected by sizable weights and dimensions due to the size, weight and number of sensors used. The vehicles used to move such apparatuses along the runways comprise motor vehicles and pickups specifically modified to support the aforesaid apparatuses. Such vehicles have non-negligible costs and dimensions. Additionally, the applicant observes that the apparatuses currently used are operatively rigid and do not allow quick modifications to the configuration and number of photometers installed. Furthermore, the applicant observes that the vehicles currently used to transport the apparatuses can be subject to positioning errors and inaccuracies with respect to the lights to be measured. In particular, the aim of the present invention is to provide a device for testing airport ground lights that is simple, light and has low operating costs.

In this context, the present invention relates, in a first aspect thereof, to a device for testing airport ground lights, as defined in claim 1, comprising:
- a support movable along an airport runway;
- a centralised processing unit, associated with the support and comprising a plurality of opto-electronic converters;
- a corresponding plurality of optical fibres adapted to pick up light radiations originating from an airport ground light and to transmit said light radiations to the respective opto-electronic converters, each optical fibre having a first end fastened to the support and a second end connected to the respective opto-electronic converter, wherein the processing unit is fastened to or integrated into the support and the optical fibres are fully housed within the support and the processing unit. The processing unit comprises a hollow body fastened to the support and the opto-electronic converters are arranged in said hollow body. The support further has an anchoring portion to a vehicle configured to support the device so that the first ends of the optical fibres face towards or parallel to a movement direction of the support along the airport runway.

In the present description and claims, the term "centralised" with reference to the processing unit means that the components of such unit are not distributed spatially on the support but are concentrated in a dedicated space.

The optical fibres are passive light radiation reception elements, are light and do not require any electric power supply and signal connections. The fact that the processing unit is centralised enables the electric power supply and signal connections to be concentrated in a single position. Advantageously, this expedient enables electric connections on the support to be avoided and makes the device simple and light.

In a second aspect thereof, the present invention relates to a device for testing airport ground lights, further comprising:
- one or more additional supports reversibly connectable to said device;
- for each additional support, a plurality of additional optical fibres adapted to pick up light radiations originating from an airport ground light and to transmit said light radiations to respective additional opto-electronic converters; each additional optical fibre having a first end fastened to the respective additional support and a second end connected or connectable to the respective additional opto-electronic converter.

Advantageously, the lightness that comes from the use of the optical fibres and the modularity of the additional supports enables the number and/or position of the light detection points to be decided.

In a third aspect thereof, the present invention relates to a mobile apparatus for testing airport ground lights, comprising:
- an autonomous vehicle;
- one or more devices for testing airport ground lights as described above, reversibly connected to said autonomous vehicle so that the first ends of the optical fibres face parallel to the advancement direction of said autonomous vehicle.

The lightness characteristics of the device described enable it to be installed on autonomous vehicles. Advantageously, this implies reduced operating costs and excellent positioning precision of the resulting mobile apparatus with respect to the ground lights to be measured.

In a fourth aspect thereof, the present description relates to a method for testing airport lights comprising:
- providing a device according to the first aspect;
- moving the device along an airport runway.

Preferably, the device is moved keeping the first ends of the optical fibres facing towards the airport lights to be tested. Preferably, the device is moved by means of an autonomous vehicle.

The device has a preferred use configuration in which it is moved with respect to the ground. In such preferred use configuration, the device is preferably moved in a horizontal plane with respect to the ground. With reference to the preferred use configuration, the term "front" means faced towards the movement direction of the device and the terms "horizontal", "horizontally", "vertical", and "vertically" refer to the spatial orientation of the device with respect to the ground.

In at least one of the aforesaid aspects, the present description can have at least one of the preferred characteristics described below considered individually or in combination.

Preferably, said support extends along a longitudinal axis; more preferably said support is a bar that extends along said longitudinal axis.

Preferably, said bar has a width measured parallel to said longitudinal axis comprised between 1100 mm and 2000 mm, even more preferably between 1500 mm and 1600 mm, for example about 1560 mm.

Preferably, said bar has a length measured transversally to said longitudinal axis comprised between 50 mm and 150 mm, even more preferably between 95 mm and 105 mm, for example about 100 mm.

Preferably, said bar has a height, or maximum thickness, measured transversally to said longitudinal axis, and perpendicular to said length, comprised between 10 mm and 40 mm, even more preferably between 15 mm and 30 mm, for example about 20 mm.

Preferably, said support has a tapered profile in a cross-section transversal to said longitudinal axis.

Preferably, said profile has a rounded front apex.

Preferably, said first ends of the optical fibres are fastened at said front apex.

Advantageously, the bar shape of the support and, preferably, with a tapered profile in a transversal cross-section, implies relatively low aerodynamic resistance thereof and is particularly advantageous should the device be moved by an aerial drone. According to the invention, the opto-electronic converters are housed within the processing unit.

Preferably, each opto-electronic converter comprises a photodiode, each second end being connected to a respective photodiode.

Advantageously, the photodiodes are opto-electronic converters with relatively contained weight.

Preferably, said processing unit comprises a photodiode board, the photodiodes of said plurality of opto-electronic converters being arranged on said photodiode board.

Advantageously, the fact of providing the photodiodes on a single photodiode board reduces the weight due to the electric power supply and signal transmission components in relation to the photodiodes.

Preferably, said processing unit comprises an analogue/digital converter connected to the respective opto-electric converter.

Preferably, said processing unit comprises one or more conversion boards, the analogue/digital converters connected to said plurality of opto-electronic converters being arranged on said conversion boards.

Advantageously, the fact of providing the analogue/digital converters on one or more conversion boards reduces the weight due to the electric power supply and signal transmission components in relation to the analogue/digital converters. According to the invention, said processing unit comprises a hollow body.

The hollow body is fastened (by means of appropriate fixing means), to the support. Preferably, said hollow body has an ogival shape.

Preferably, the ogival shape develops around an axis perpendicular to said longitudinal axis.

Preferably, said hollow body has a maximum diameter less than 200 mm, even more preferably less than 120 mm, for example equal to 100 mm. According to the invention, the opto-electronic converters are arranged inside said hollow body.

Preferably, the analogue/digital converters are arranged inside said hollow body. According to the invention, said optical fibres extend inside said support, between said support and said hollow body.

Advantageously, the hollow body enables the electronic components to be protected against impact and adverse weather conditions.

In another embodiment, said processing unit is integrated into the support. Preferably, said processing unit is positioned in a centralised position with respect to a longitudinal extension of the support. According to the invention, said optical fibres extend inside said support, between said support and said processing unit.

Preferably, said processing unit is connected to, preferably fastened onto, the support in a centralised position with respect to a longitudinal extension of the support.

Preferably, the first ends of the optical fibres are arranged with respect to said support so as to receive light radiations coming from a spectrum of incident directions.

Preferably, said spectrum of incident directions represents a visual line of sight of a pilot from a cockpit of an aircraft in a preferred use configuration of said device.

Preferably, said spectrum of incident directions has a horizontal angular aperture comprised between 10° and 50°, more preferably between 20° and 40°, for example about 30°. Preferably, said spectrum of incident directions has a vertical angular aperture comprised between 10° and 50°, more preferably between 20° and 40°, for example about 30°. According to the invention, said support has an anchoring portion to a vehicle.

Preferably, said anchoring portion is configured to orient the first ends with respect to the vehicle so that said first ends receive light radiations coming from a spectrum of directions representative of a visual line of sight of a pilot in a cockpit of an aircraft oriented according to an advancement direction of said vehicle. According to the invention, said anchoring portion is configured to support the device so that the first ends of the optical fibres face towards, or parallel to, a movement direction of the support along said airport runway.

Preferably, said anchoring portion is adapted to keep said bar oriented perpendicularly with respect to an advancement direction of said vehicle.

Preferably, said device comprises a plurality of ferrules (preferably made of brass), each ferrule fixing the first end of a respective optical fibre to the support.

Preferably, the first ends of the optical fibres are distributed along a parallel axis to said longitudinal axis.

Preferably, the first ends of the optical fibres are equidistant from one another.

Preferably, the first ends of the optical fibres are oriented in a common direction to one another.

Preferably, said support has a plurality of holes, the first end of each optical fibre being fastened at a respective hole.

Preferably, there are thirteen of the optical fibres and corresponding opto-electronic converters.

Preferably, said processing unit comprises an electronic circuit operatively connected to the opto-electronic converters for receiving the respective output signals indicative of an airport ground light, said electronic circuit being configured to correlate said output signals to a time and/or space coordinate.

Preferably, said output signals describe an intensity and/or a colour of the light radiation picked up by each optical fibre.

Preferably, said electronic circuit is connected to the opto-electronic converters through the respective analogue/digital converters.

Preferably, said electronic circuit is configured to calculate a light profile of an airport ground light as a function of a development of said output signals in a time interval and a variable position of said device with respect to said airport ground light in said time interval.

Preferably, said processing unit comprises a memory and/or a data transmission sub-unit, preferably wireless.

Preferably, said optical fibres are of the polymer type and configured to pick up and transmit visible light. According to the invention, the optical fibres are fully housed within the support and the processing unit.

Preferably, the optical fibres are fully housed within the support and the processing unit in the portion between the first ends and the second ends.

Preferably, the device further comprises:
- one or more additional supports connectable to said support;
- for each additional support, a plurality of additional optical fibres adapted to pick up light radiations originating from an airport ground light and to transmit said light radiations to respective additional opto-electronic converters; each additional optical fibre having a first end fastened to the respective additional support and a second end connected or connectable to the respective additional opto-electronic converter.

Preferably, the first ends of said optical fibres and the first ends of said additional optical fibres are operatively arranged so as to define a matrix of reception points of light radiations.

In some embodiments, the centralised processing unit comprises the additional opto-electronic converters.

In some embodiments, the device comprises an additional centralised processing unit for each additional support, said additional centralised processing unit comprising respective ones of said additional opto-electronic converters.

In some embodiments, said autonomous vehicle is a ground drone.

In some embodiments, said autonomous vehicle an aerial drone.

Preferably, said aerial drone is a multi-rotor drone.

Further characteristics and advantages of the present description will become clearer from the following detailed description of the preferred embodiments thereof, with reference to the appended drawings and provided by way of indicative and non-limiting example. In such drawings, in which the embodiments are not represented in scale:
- Figure 1 shows a top view of a device for testing airport ground lights according to an embodiment of the present description;
- Figure 2 shows a front view of the device for testing airport ground lights of Figure 1;
- Figure 3 shows a vertical section view of the device for testing airport ground lights of figure 1;

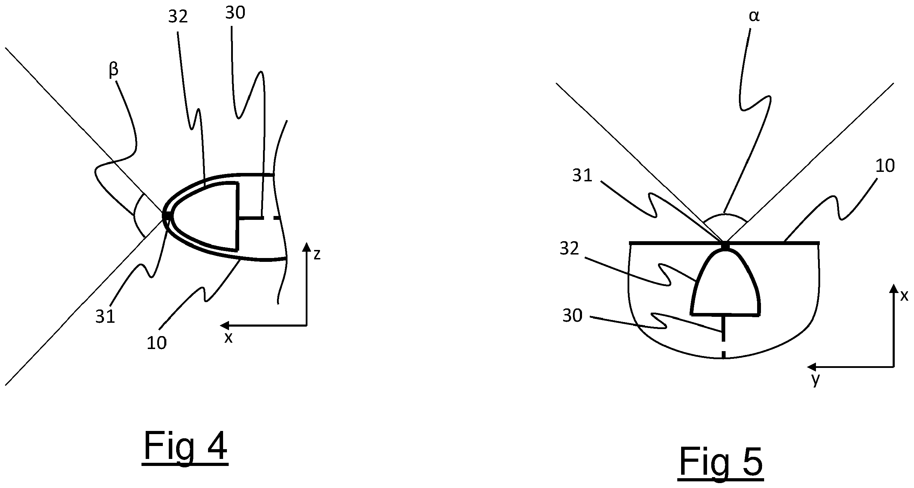

- Figure 4 shows a schematic vertical section view of a detail of the device for testing airport ground lights of Figure 1;
- Figure 5 shows a schematic horizontal section view of a detail of the device for testing airport ground lights of figure 1.

A device for testing airport ground lights according to the present description is indicated with reference number 1 in the appended figures hereinafter referred to with the abbreviated annotation "device 1".

In the appended figures, the axes x and y indicate a horizontal plane with respect to the ground whereas the axis z indicates a vertical direction.

The device 1 comprises a support 10 shaped like a bar extending along a longitudinal axis "L".

In the appended figures, the device 1 is depicted in a preferred use configuration with respect to the axes x, y and z, wherein the longitudinal axis "L" is parallel to the axis y.

In the preferred use configuration, the device 1 is moved parallel to the aforesaid horizontal plane.

The bar has a width measured parallel to the longitudinal axis "L" of 1560 mm, a length measured transversally to the longitudinal axis "L" of 100 mm and a height measured transversally to the longitudinal axis "L", perpendicular to the longitudinal axis "L" of 20 mm.

In the preferred use configuration, the length dimension of the device 1 is substantially aligned with the axis x, the width dimension is substantially aligned with the axis y and the height dimension is substantially aligned with the axis z.

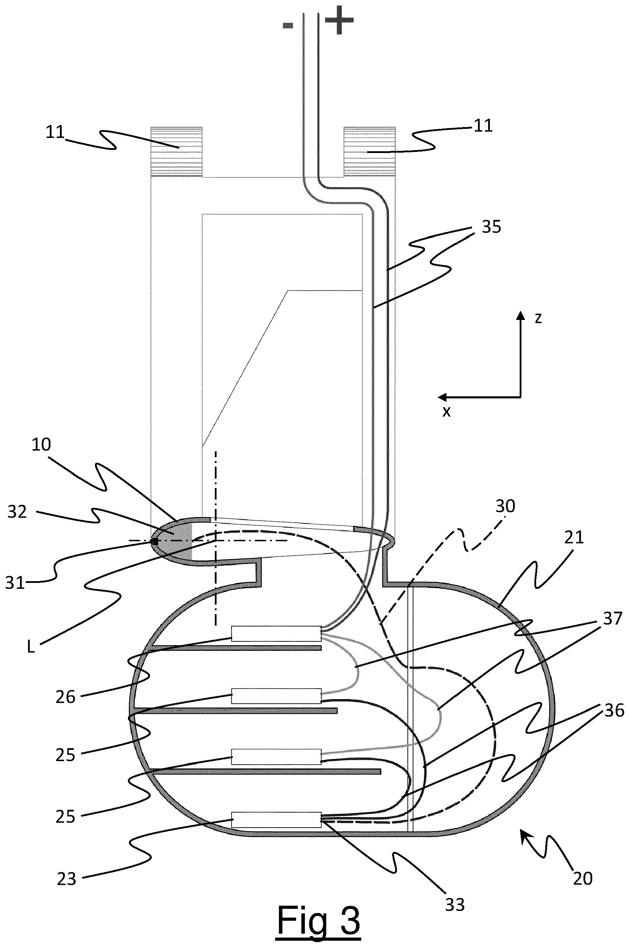

The support 10 has a tapered profile in transversal cross-section (perpendicular to the longitudinal axis "L"). With the term "tapered" it is meant that the profile has a shape conformed to reduce the aerodynamic resistance to the movement in the preferred use configuration. Preferably, the profile is provided with a rounded front apex and preferably the length dimension is greater than the height dimension by a factor of at least three, preferably at least five, as can be seen in the sectional view of Figure 3.

The support 10 has an anchoring portion 11 for anchoring the support 10 itself to a vehicle, preferably an autonomous vehicle such as a ground or aerial drone. The anchoring portion 11 is conformed to enable the movement of the device 1 by means of the aforesaid vehicle along an airport runway, so as to keep the device 1 oriented in the preferred use configuration described above.

The device 1 comprises a centralised processing unit 20 associated with the support 10 and provided with suitable power supply terminals 35.

In the embodiment illustrated the processing unit 20 comprises a hollow body 21 connected to the support 10 in a central position with respect to the width dimension thereof and conformed to house within it the optical, electrical and opto-electronic components of the processing unit 20 described below.

The hollow body 21 has an ogival shape having a maximum diameter of 100 mm and extending around an axis perpendicular to the longitudinal axis "L".

The processing unit 20 comprises a plurality of opto-electronic converters, in particular thirteen of them, arranged within the hollow body 21.

Each opto-electronic converter comprises a photodiode. The photodiodes are installed on a photodiode board 23, connected to the power supply terminals of the processing unit 20 and configured to provide mechanical support and electric power to the photodiodes.

The processing unit 20 further comprises a plurality of analogue/digital converters, in particular thirteen of them, each electrically connected to a respective photodiode through an analogue electrical connection 36 for receiving therefrom an analogue input electrical signal representative of one or more characteristics of a measured light radiation and to provide a digital output signal representative of the same characteristics. In the embodiment illustrated, the processing unit 20 comprises two conversion boards 25 that support and power the analogue/digital converters. In particular, one of the two conversion boards 25 supports seven analogue/digital converters whereas the other conversion board 25 supports six analogue/digital converters.

Furthermore, the processing unit 20 comprises an electronic circuit 26 connected to the analogue/digital converters by means of a digital electrical connection 37 and configured to process the digital signals coming therefrom. In particular, the electronic circuit 26 comprises at least one processor, a memory and a data transmission sub-unit, preferably wireless.

In a possible embodiment not illustrated, the processing unit 20 does not comprise the hollow body 21. In this case, the optical, opto-electronic and electrical components of the processing unit 20 are integrated into the support 10 and are concentrated in a specific and spatially limited region with respect to the extension of the support 10. In other words, the processing unit 20 is integrated into the support 10.

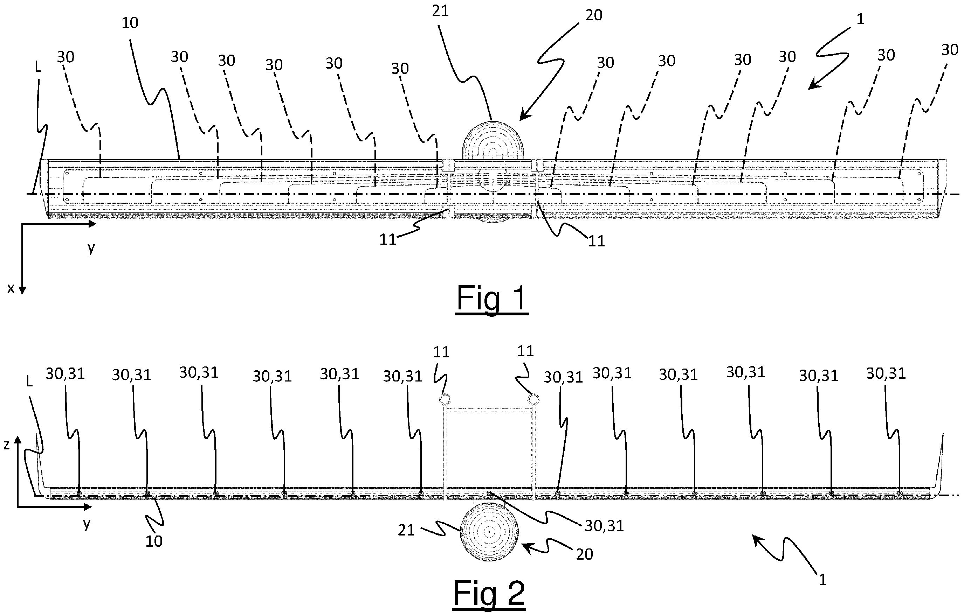

The device 1 further comprises a plurality of optical fibres 30 of the polymer type and configured to pick up and transmit visible light. In particular, there are thirteen optical fibres 30, depicted schematically with broken lines in figures 1 and 3. Each optical fibre 30 is conformed and arranged so as to pick up the light radiation produced by an airport ground light and to transmit it to a respective photodiode described above.

The support 10 has a hole for each optical fibre 30, arranged at the front apex. Each optical fibre 30 has a first end 31 fastened to the support 10 at its apex at a respective hole so as to pick up a light radiation incident on the hole. In particular, the first end 31 is arranged so as to be subject to light radiation coming from a spectrum of predetermined incident directions with respect to the preferred use configuration of the device 1. Such spectrum of incident directions includes an opposite direction to the movement direction of the device 1 in the preferred use configuration. In particular, in the preferred use configuration, the spectrum of incident directions represents the field of view of a pilot from the cockpit of an aircraft during the landing or taxiing step on the runway.

In the embodiment illustrated, the spectrum of incident directions has a horizontal angular aperture "α" of 30° and a vertical angular aperture "β" of 30°. As previously specified, the terms "horizontal" and "vertical" refer to the preferred use configuration of the device 1.

The horizontal and vertical angular apertures are determined by the conformation of the first end 31 of each optical fibre 30 and its interface surface.

All the first ends 31 are oriented in the same direction, perpendicular to the longitudinal axis "L", parallel to the horizontal plane and parallel to the motion direction of the vehicle in the preferred use configuration.

The device 1 comprises a plurality of ferrules 32, preferably made of brass, fastened to the support 10 at the aforesaid front apex. Each ferrule 32 fixes the first end 31 of a respective optical fibre 30 to the support 10.

The first ends 31 are arranged along the front apex of the support 10 and distributed along an axis parallel to the longitudinal axis "L" equidistant from one another.

The optical fibres 30 extend from the support 10 to the hollow body 21 and have respective second ends 33 internal to the hollow body 21. The optical fibres 30 are housed completely within the support 10 and the hollow body 21 in the portion between the first ends 31 and the second ends 33.

The second end 33 of each optical fibre 30 is connected to a respective photodiode so that the photodiode can receive light radiation coming from the optical fibre 30 and generate a variable analogue signal over time descriptive of characteristics of such light radiation. The analogue signal is subsequently received from an analogue/digital converter that converts it into a digital output signal, representative of characteristics of the light radiation picked up, in particular of its intensity and colour.

The processor of the electronic circuit 26 receives as an input the output signals of the analogue/digital converters representative of characteristics of the light radiation measured at the points in which the first ends 31 of the optical fibres 30 are positioned. The processor further receives as an input the spatial tracking of the device 1 with respect to the corresponding ground light, measured for example through a satellite tracker (such as a GPS sensor). The satellite tracker may be on the vehicle and operatively connected with the electronic circuit 26, for example through Wi-Fi, or it may be installed directly on the device 1 and operatively connected with the electronic circuit 26, for example through serial bus.

The processor performs a correlation between the data related to a development over a time interval of the characteristics related to the measured light radiation (resulting from the output signals of the analogue/digital converters) and the data related to a development over the same time interval of the spatial position of each acquisition. In particular, the spatial position of each acquisition considers both the spatial tracking of the device 1, and the position of the respective first end 31 with respect to the support 10.

For example, the correlation may be performed by directly associating the data related to the light radiation with the spatial coordinate in which they are acquired, or by associating the data related to the light radiation with the time coordinate in which they were acquired so as to enable the subsequent reconstruction of the spatial coordinate corresponding to such time coordinate.

In one embodiment, the processor saves the data acquired in the memory, suitably correlated as described above, so as to enable the subsequent processing thereof.

In another possible embodiment, the processor is configured to calculate the light profile of an airport ground light according to the indications contained in the ICAO publications "Annex 14 Vol.1 Aerodrome Design and Operations" and "Doc. 9157 Aerodrome Design Manual part 4".

The data resulting from the processing are saved locally on the device 1 or are transmitted to an external apparatus through the aforesaid data transmission sub-unit, preferably wireless.

The airport ground lights are typically arranged in rows of lights along the runways or taxiways. In the preferred use configuration, the device 1 is moved parallel to the row of lights, above it, so as to pick up and process in succession the light radiation of each light.

In a possible embodiment not illustrated, the support 10 is configured for a reversible connection with one or more additional analogous supports. Each additional support supports a plurality of additional optical fibres, arranged analogously to the optical fibres 30 described above. In particular, each additional optical fibre has a first end fastened to the front apex of the additional support, at a respective hole, so as to pick up incident light radiation.

In the preferred use configuration, the additional supports are configured to be fastened to the support 10 above or below it so as to have respective longitudinal axes parallel to the longitudinal axis "L" of the support 10.

The first ends of the additional optical fibres are operatively arranged on the additional supports so as to define, together with the optical fibres 30 of the support 10 described above, a matrix of light radiation reception points.

The additional optical fibres have a second end connected or connectable to a respective additional opto-electronic converter, in turn connected or connectable to the electronic circuit 26 through an additional analogue/digital converter.

In a possible embodiment, the additional opto-electronic converters are integrated into the processing unit 20 described above and the additional optical fibres can be connected thereto by means of relevant connectors.

In another possible embodiment, the additional opto-electronic converters are fastened to the additional supports and connectable to the electronic circuit 26 of the processing unit 20.

Further subject matter of the present invention is a device for testing airport ground lights, not illustrated, comprising the device 1 described above and one or more additional supports of the type described above, reversibly connectable to the device 1 for defining an array of light radiation reception points.

Subject matter of the present invention is also a mobile apparatus for testing airport ground lights, not illustrated in the appended figures.

The aforesaid mobile apparatus comprises an autonomous vehicle, for example a such as a ground or aerial drone, preferably a multi-rotor drone such as a hexacopter. The notation "autonomous vehicle" means a vehicle without a pilot, able to control its position to follow a trajectory, which is predetermined or established at the moment by a pilot.

The mobile apparatus cited above further comprises a device for testing airport ground lights as described above, anchored to the autonomous vehicle by means of the anchoring portion 11 so that the first ends 31 of the optical fibres 30 face parallel to an advancement direction of the autonomous vehicle.

## Claims

1. Device (1) for testing airport ground lights, comprising:
- a support (10) movable along an airport runway;
- a centralised processing unit (20), associated with the support (10) and comprising a plurality of opto-electronic converters;
- a corresponding plurality of optical fibres (30) adapted to pick up light radiations originating from an airport ground light and to transmit said light radiations to the respective opto-electronic converters, each optical fibre (30) having a first end (31) fastened to the support (10) and a second end (33) connected to the respective opto-electronic converter, wherein:
- the processing unit (20) is fastened to or integrated into the support (10);
- said optical fibres (30) are fully housed within the support (10) and the processing unit (20);
- said processing unit (20) comprises a hollow body (21) fastened to the support (10) and the opto-electronic converters are arranged in said hollow body (21); and
- said support (10) has an anchoring portion (11) to a vehicle configured to support the device (1) so that the first ends (31) of the optical fibres (30) face towards or parallel to a movement direction of the support (10) along said airport runway.

2. Device (1) according to claim 1, wherein said support (10) is a bar extending along a longitudinal axis (L); said support (10) having a tapered profile in a cross-section transversal to said longitudinal axis (L).

3. Device (1) according to claim 2, wherein said tapered profile has a rounded front apex and said first ends (31) of the optical fibres (30) are fastened at said front apex.

4. Device (1) according to any one of the preceding claims, wherein each opto-electronic converter comprises a photodiode, and
wherein said processing unit (20) comprises a photodiode board (23), the photodiodes of said plurality of opto-electronic converters being arranged on said photodiode board (23).

5. Device (1) according to one or more of the preceding claims, wherein the first ends (31) of the optical fibres (30) are oriented with respect to said support (10) so as to receive light radiations coming from a spectrum of incident directions having a horizontal angular aperture (α) comprised between 10° and 50°, more preferably between 20° and 40°, for example about 30°, and/or a vertical angular aperture (β) comprised between 10° and 50°, more preferably between 20° and 40°, for example about 30°.

6. Device (1) according to one or more of the preceding claims, wherein said device (1) comprises a plurality of ferrules (32), each ferrule (32) fastening the first end (31) of a respective optical fibre (30) to the support (10).

7. Device (1) according to one or more of the preceding claims, wherein said support (10) has a plurality of holes, the first end (31) of each optical fibre (30) being fastened at a respective hole.

8. Device (1) according to one or more of the preceding claims, wherein said processing unit (20) comprises an electronic circuit (26) operatively connected to the opto-electronic converters for receiving respective output signals indicative of an airport ground light, said electronic circuit (26) being configured to correlate said output signals to a time and/or space coordinate.

9. Device (1) according to one or more of the preceding claims, further comprising:
- one or more additional supports detachably connectable to said support (10);
- for each additional support, a plurality of additional optical fibres adapted to pick up light radiations originating from an airport ground light and to transmit said light radiations to respective additional opto-electronic converters; each additional optical fibre having a first end fastened to the respective additional support and a second end connected or connectable to the respective additional opto-electronic converter.

10. Mobile apparatus for testing airport ground lights, comprising:
- an autonomous vehicle;
- a device (1) for testing airport ground lights according to one or more of the preceding claims, reversibly connected to said autonomous vehicle so that the first ends (31) of the optical fibres (30) face parallel to an advancing direction of said autonomous vehicle.

11. Method for testing airport lights comprising:
- providing a device (1) according to any one of claims 1 to 9;
- moving the device (1) along an airport runway.

## Patentansprüche

1. Vorrichtung (1) zur Überprüfung der Pistenbefeuerung auf Flughäfen, umfassend:
- einen Träger (10), der entlang einer Flughafenstart- und Landebahn beweglich ist;
- eine zentrale Verarbeitungseinheit (20), die mit dem Träger (10) assoziiert ist und eine Vielzahl von optoelektronischen Wandlern umfasst;
- eine entsprechende Vielzahl von optischen Fasern (30), die angepasst sind, um Lichtstrahlungen aufzunehmen, die von einer Pistenbefeuerung auf Flughäfen ausgehen, und um die Lichtstrahlungen an die jeweiligen optoelektronischen Wandler zu übertragen, wobei jede optische Faser (30) ein erstes Ende (31), das an dem Träger (10) befestigt ist, und ein zweites Ende (33) aufweist, das mit dem jeweiligen optoelektronischen Wandler verbunden ist, wobei:
- die Verarbeitungseinheit (20) an dem Träger (10) befestigt oder in diesen integriert ist;
- die optischen Fasern (30) vollständig in dem Träger (10) und der Verarbeitungseinheit (20) untergebracht sind;
- die Verarbeitungseinheit (20) einen Hohlkörper (21) umfasst, der an dem Träger (10) befestigt ist, und die optoelektronischen Wandler in dem Hohlkörper (21) angeordnet sind; und
- der Träger (10) einen Verankerungsabschnitt (11) an einem Fahrzeug aufweist, der konfiguriert ist, um die Vorrichtung (1) zu tragen, so dass die ersten Enden (31) der optischen Fasern (30) in Richtung oder parallel zu einer Bewegungsrichtung des Trägers (10) entlang der Flughafenstart- und Landebahn weisen.

2. Vorrichtung (1) nach Anspruch 1, wobei der Träger (10) ein Stab ist, der sich entlang einer Längsachse (L) erstreckt; wobei der Träger (10) ein sich verjüngendes Profil in einem Querschnitt quer zu der Längsachse (L) aufweist.

3. Vorrichtung (1) nach Anspruch 2, wobei das sich verjüngende Profil einen abgerundeten vorderen Scheitelpunkt aufweist und die ersten Enden (31) der optischen Fasern (30) an dem vorderen Scheitelpunkt befestigt sind.

4. Vorrichtung (1) nach einem der vorhergehenden Ansprüche, wobei jeder optoelektronische Wandler eine Photodiode umfasst, und
wobei die Verarbeitungseinheit (20) eine Photodiodenplatine (23) umfasst, wobei die Photodioden der Vielzahl von optoelektronischen Wandlern auf der Photodiodenplatine (23) angeordnet sind.

5. Vorrichtung (1) nach einem oder mehreren der vorhergehenden Ansprüche, wobei die ersten Enden (31) der optischen Fasern (30) in Bezug auf den Träger (10) so ausgerichtet sind, dass sie Lichtstrahlungen empfangen, die aus einem Spektrum von Einfallsrichtungen mit einer horizontalen Winkelöffnung (α) zwischen 10° und 50°, bevorzugter zwischen 20° und 40°, zum Beispiel etwa 30°, und/oder einer vertikalen Winkelöffnung (β) zwischen 10° und 50°, bevorzugter zwischen 20° und 40°, zum Beispiel etwa 30°, stammen.

6. Vorrichtung (1) nach einem oder mehreren der vorhergehenden Ansprüche, wobei die Vorrichtung (1) eine Vielzahl von Hülsen (32) umfasst, wobei jede Hülse (32) das erste Ende (31) einer jeweiligen optischen Faser (30) an dem Träger (10) befestigt.

7. Vorrichtung (1) nach einem oder mehreren der vorhergehenden Ansprüche, wobei der Träger (10) eine Vielzahl von Löchern aufweist, wobei das erste Ende (31) jeder optischen Faser (30) an einem jeweiligen Loch befestigt ist.

8. Vorrichtung (1) nach einem oder mehreren der vorhergehenden Ansprüche, wobei die Verarbeitungseinheit (20) eine elektronische Schaltung (26) umfasst, die operativ mit den optoelektronischen Wandlern verbunden ist, um jeweilige Ausgangssignale zu empfangen, die eine Pistenbefeuerung auf Flughäfen anzeigen, wobei die elektronische Schaltung (26) konfiguriert ist, um die Ausgangssignale mit einer Zeit- und/oder Raumkoordinate zu korrelieren.

9. Vorrichtung (1) nach einem oder mehreren der vorhergehenden Ansprüche, ferner umfassend:
- eine oder mehrere zusätzliche Träger, die lösbar mit dem Träger (10) verbunden werden können;
- für jeden zusätzlichen Träger eine Vielzahl von zusätzlichen optischen Fasern, die angepasst sind, um Lichtstrahlungen aufzunehmen, die von einer Pistenbefeuerung auf Flughäfen ausgehen, und um die Lichtstrahlungen an jeweilige zusätzliche optoelektronische Wandler zu übertragen; wobei jede zusätzliche optische Faser ein erstes Ende, das an dem jeweiligen zusätzlichen Träger befestigt ist, und ein zweites Ende aufweist, das mit dem jeweiligen zusätzlichen optoelektronischen Wandler verbunden oder verbindbar ist.

10. Bewegliche Vorrichtung (1) zur Überprüfung der Pistenbefeuerung auf Flughäfen, umfassend:
- ein autonomes Fahrzeug.
- eine Vorrichtung (1) zur Überprüfung der Pistenbefeuerung auf Flughäfen nach einem oder mehreren der vorhergehenden Ansprüche, die reversibel mit dem autonomen Fahrzeug verbunden ist, so dass die ersten Enden (31) der optischen Fasern (30) parallel zu einer Vorschubrichtung des autonomen Fahrzeugs weisen.

11. Verfahren zur Überprüfung der Pistenbefeuerung auf Flughäfen, umfassend:
- Bereitstellen einer Vorrichtung (1) nach einem der Ansprüche 1 bis 9;
- Bewegen der Vorrichtung (1) entlang einer Flughafenstart- und Landebahn.

## Revendications

1. Équipement (1) de contrôle des feux de balisage aéroportuaire, comprenant :
- un support (10) mobile le long d'une piste d'aéroport ;
- une unité de traitement centralisée (20), associée au support (10) et comprenant une pluralité de convertisseurs optoélectroniques ;
- une pluralité correspondante de fibres optiques (30) adaptées pour capter les radiations lumineuses provenant d'un feu de balisage aéroportuaire et pour transmettre lesdites radiations lumineuses aux convertisseurs optoélectroniques respectifs, chaque fibre optique (30) ayant une première extrémité (31) fixée au support (10) et une seconde extrémité (33) reliée au convertisseur optoélectronique respectif, dans lequel :
- l'unité de traitement (20) est fixée ou intégrée au support (10) ;
- lesdites fibres optiques (30) sont entièrement logées dans le support (10) et l'unité de traitement (20) ;
- ladite unité de traitement (20) comprend un corps creux (21) fixé au support (10) et les convertisseurs optoélectroniques sont disposés dans ledit corps creux (21) ; et
- ledit support (10) a une partie d'ancrage (11) à un véhicule configuré pour supporter l'équipement (1) de sorte que les premières extrémités (31) des fibres optiques (30) soient orientées vers ou parallèlement à une direction de déplacement du support (10) le long de ladite piste d'aéroport.

2. Équipement (1) selon la revendication 1, dans lequel ledit support (10) est une barre s'étendant le long d'un axe longitudinal (L) ; ledit support (10) ayant un profil effilé dans une section transversale audit axe longitudinal (L).

3. Équipement (1) selon la revendication 2, dans lequel ledit profil effilé a un sommet avant arrondi et lesdites premières extrémités (31) des fibres optiques (30) sont fixées audit sommet avant.

4. Équipement (1) selon l'une quelconque des revendications précédentes, dans lequel chaque convertisseur optoélectronique comprend une photodiode, et
dans lequel ladite unité de traitement (20) comprend une carte de photodiode (23), les photodiodes de ladite pluralité de convertisseurs optoélectroniques étant disposées sur ladite carte de photodiode (23).

5. Équipement (1) selon l'une ou plusieurs des revendications précédentes, dans lequel les premières extrémités (31) des fibres optiques (30) sont orientées par rapport audit support (10) de manière à recevoir des radiations lumineuses provenant d'un spectre de directions incidentes ayant une ouverture angulaire horizontale (α) comprise entre 10° et 50°, plus préférentiellement entre 20° et 40°, par exemple environ 30°, et/ou une ouverture angulaire verticale (β) comprise entre 10° et 50°, plus préférentiellement entre 20° et 40°, par exemple environ 30°.

6. Équipement (1) selon l'une ou plusieurs des revendications précédentes, dans lequel ledit équipement (1) comprend une pluralité de viroles (32), chaque virole (32) fixant la première extrémité (31) d'une fibre optique respective (30) au support (10).

7. Équipement (1) selon l'une ou plusieurs des revendications précédentes, dans lequel ledit support (10) a une pluralité de trous, la première extrémité (31) de chaque fibre optique (30) étant fixée à un trou respectif.

8. Équipement (1) selon l'une ou plusieurs des revendications précédentes, dans lequel ladite unité de traitement (20) comprend un circuit électronique (26) relié de manière opérationnelle aux convertisseurs optoélectroniques pour recevoir des signaux de sortie respectifs indiquant un feu de balisage aéroportuaire, ledit circuit électronique (26) étant configuré pour corréler lesdits signaux de sortie à une coordonnée temporelle et/ou spatiale.

9. Équipement (1) selon l'une ou plusieurs des revendications précédentes, comprenant en outre :
- un ou plusieurs supports supplémentaires pouvant être reliés de manière amovible audit support (10) ;
- pour chaque support supplémentaire, une pluralité de fibres optiques supplémentaires adaptées pour capter les radiations lumineuses provenant d'un feu de balisage aéroportuaire et pour transmettre lesdites radiations lumineuses à des convertisseurs optoélectroniques supplémentaires respectifs ; chaque fibre optique supplémentaire ayant une première extrémité fixée au support supplémentaire respectif et une deuxième extrémité reliée ou pouvant être reliée au convertisseur optoélectronique supplémentaire respectif.

10. Appareil mobile de contrôle des feux de balisage aéroportuaire, comprenant :
- un véhicule autonome ;
- un équipement (1) de contrôle des feux de balisage aéroportuaire selon l'une ou plusieurs des revendications précédentes, relié de manière réversible audit véhicule autonome de sorte que les premières extrémités (31) des fibres optiques (30) soient orientées parallèlement à une direction d'avancement dudit véhicule autonome.

11. Procédé de contrôle des feux aéroportuaires comprenant :
- la fourniture d'un équipement (1) selon l'une quelconque des revendications 1 à 9 ;
- le déplacement de l'équipement (1) le long d'une piste d'aéroport.
